# EUROPÄISCHE PATENTSCHRIFT

(11) **EP 0 824 881 B1**
(45) Veröffentlichungstag und Bekanntmachung des Hinweises auf die Patenterteilung: **13.03.2002**
(21) Anmeldenummer: 97111000.2
(22) Anmeldetag: 02.07.1997
(51) Int. Cl.: A47C 23/06

(54) **Elastische Kunststoffleiste, insbesondere für Lattenroste**
Elastic slat made of plastics, particularly for slatted bed bases
Latte élastique en plastique, notamment pour sommier à lattes

(30) Priorität: 16.08.1996 DE 19632960
(43) Veröffentlichungstag der Anmeldung: 25.02.1998
(73) Patentinhaber: Rummel Matratzen GmbH & Co., 91413 Neustadt/Aisch (DE)
(72) Erfinder: Richter, Dietrich, 91413 Neustadt/Aisch (DE); Börger, Herbert, Dr.-Ing., 90401 Nürnberg (DE)
(74) Vertreter: Schneck, Herbert, Dipl.-Phys., Dr.

(56) Entgegenhaltungen:
- DE-U- 8 502 892
- FR-A- 1 569 242

## Beschreibung

Die Erfindung richtet sich auf eine elastische Kunststoffleiste, insbesondere für Lattenroste von Liegemöbeln, bei welchen die Kunststoffleiste auf seitlichen Längsholmen aufliegt, wobei die Kunststoffleiste aus einem duro- oder thermoplastischen Material mit im wesentlichen unidirektional orientierten Verstärkungsfaser gebildet ist.

Eine derartige Kunststoffleiste ist aus DE 42 27 187 C1 bekannt. Sie weist an ihrer Unterseite Längsrippen auf, wobei im Bereich des unteren Endes dieser Rippen zusätzlich noch Armierungselemente eingearbeitet sind.

Bei der vorbekannten Kunststoffleiste wurde im Prinzip bereits erkannt, daß es möglich ist, durch Ersetzen der herkömmlicherweise eingesetzten verleimten Holzleisten durch Kunststoffmaterial ganz gezielt die Vorteile dieses Materials hinsichtlich der Formgebung und der Zusammensetzung auszunutzen.

Allerdings wird mit Kunststoffleisten der vorbekannten Art noch nicht der an sich wünschenswerte optimale Liegekomfort und das unter medizinischen Aspekten angestrebte Federverhalten erreicht.

Hiervon ausgehend liegt der Erfindung die Aufgabe zugrunde, eine Kunststoffleiste der eingangs genannten Art so auszubilden, daß sie einerseits kostengünstig herstellbar ist, andererseits aber ein hoher Liegekomfort gewährleistet ist.

Diese Aufgabe wird erfindungsgemäß dadurch gelöst, daß die Kunststoffleiste als Hohlprofil mit einem sich in Profil-Längsrichtung verändernden Querschnitt ausgebildet ist, wobei der Querschnitt sich in Längsrichtung derart verändert, daß er im Mittelbereich schmäler und höher und übergehend in die Randbereiche breiter und flacher ausgebildet ist. Hieraus resultiert eine erhöhte Biegesteifigkeit im Mittelbereich.

Durch die Gestaltung der Leiste als Hohlprofil wird es möglich, das statische Verhalten und das dynamische Federverhalten zu optimieren, wobei insbesondere auch erreicht werden kann, daß die vom Benutzer subjektiv empfundenen Liegeeigenschaften über die gesamte Breite des Lattenrostes gleich sind. Das erfindungsgemäße Hohlprofil ermöglicht dies bei minimalem Materialeinsatz.

In weiterer Ausgestaltung der Erfindung kann vorgesehen sein, daß sie aus einem Thermoplast mit einem Fasergehalt von mehr als 40 Vol.-% besteht, wobei die eingesetzten Fasern als lange Fasern beziehungsweise als Endlosfasern ausgebildet sind.

Die Fasern können Glasfasern, Kohlefasern, Aramidfasern, synthetische Fasern, Naturfasern oder Mischungen hieraus sein. Die Fasern verlaufen vorzugsweise in Längsrichtung der Leisten.

Gemäß einer vorteilhaften Ausgestaltung ist vorgesehen, daß die Kunststoffleiste in ihren Randbereichen einen U- oder S-förmigen Auflagebereich zum Grundrahmen in Form eines federnden, mit der Kunststoffleiste einstückigen Abschnitts aufweist.

An der Oberseite der Leiste kann eine Druckaufnahmeanordnung angebracht sein, zum Beispiel in Form eines flachen Steges, wodurch insbesondere in den stärker gewölbten Mittelbereichen die Bildung von Druckbereichen auf der Unterseite der Matratze vermieden wird.

Die Erfindung richtet sich auch auf ein Verfahren zur Herstellung einer Kunststoffleiste der vorstehend beschriebenen Art, welches sich dadurch auszeichnet, daß aus einem endlosen Strangprofil aus einem Thermoplast-Faser-Verbund der jeweiligen Leiste entsprechende Abschnitte abgetrennt und in einer der Endform entsprechenden längsgeteilten Form dann unter Wärme- und Druckeinwirkung eine Umformung derart vorgenommen wird, daß der Thermoplast in den Schmelzzustand übergeführt und mittels Druck geformt wird. Günstigerweise kann bei dieser Umformung mit einem Gas-Innendruck-Verfahren gearbeitet werden.

Nachfolgend wird die Erfindung anhand eines bevorzugten Ausführungsbeispiels in Verbindung mit der Zeichnung näher erläutert. Dabei zeigen
- Fig. 1: eine perspektivische Ansicht eines Lattenrostes, der unter Verwendung erfindungsgemäßer Kunststoffleisten aufgebaut ist,
- Fig. 2: eine Frontansicht einer erfindungsgemäßen Kunststoffleiste und
- Fig. 3: eine graphische Darstellung des Profilverlaufes einer Leiste ausgehend von deren einem äußeren Ende zur Mitte hin.

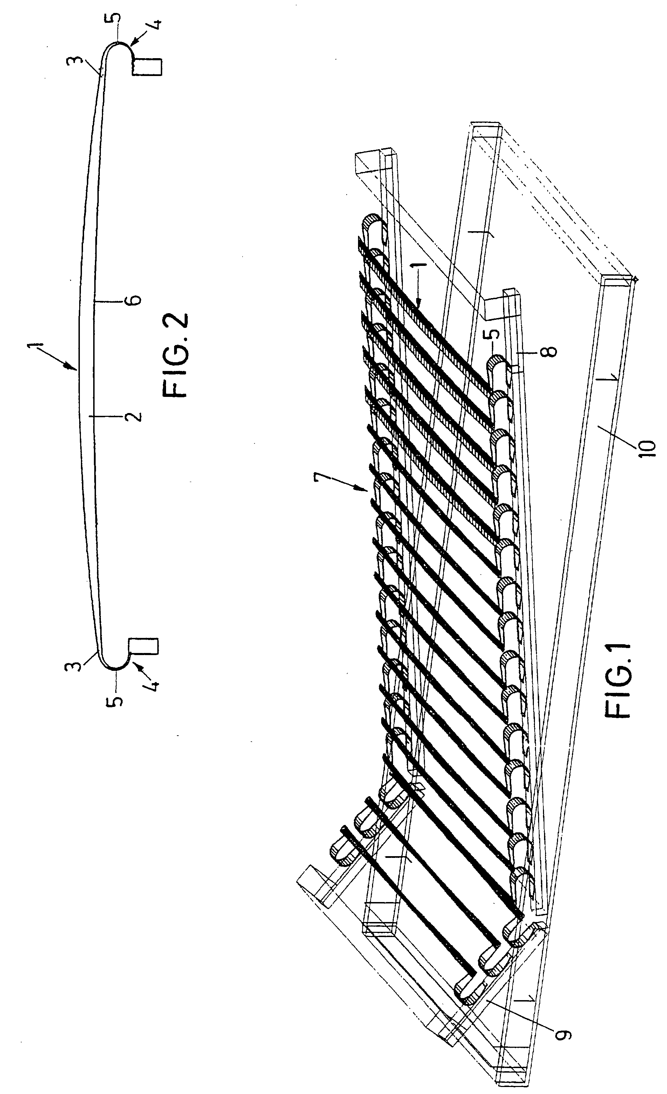

Eine in der Zeichnung dargestellte erfindungsgemäße Kunststoffleiste 1 umfaßt einen Grundkörper 2 und im Bereich der äußeren Enden 3 einen Auflagebereich in Form eines Abschnitts 4, der einen U-förmigen Federabschnitt 5 umfaßt, der sich entweder, wie bei der Ausführungsform in Fig. 2 in Verlängerung der Längsachse des Grundkörpers 2, oder, wie bei der Ausführungsform in Fig. 1, senkrecht hierzu erstreckt.

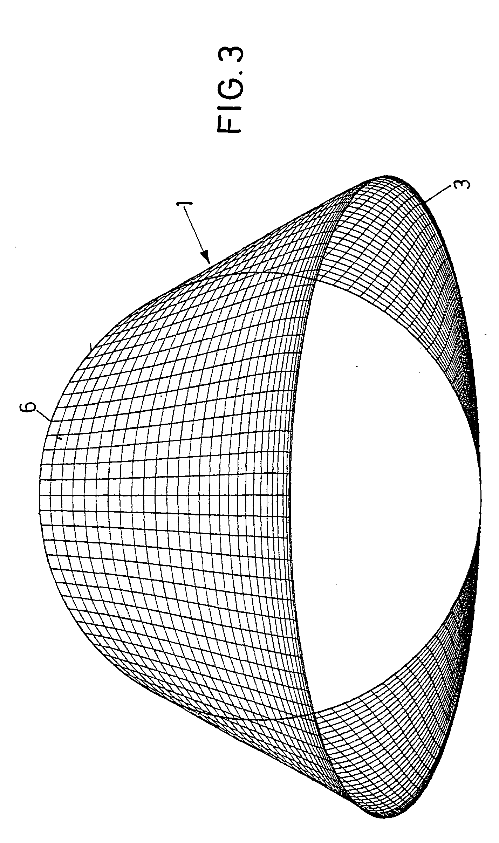

Die Kunststoffleiste 1 ist durch ein Hohlprofil gebildet, welches im Randbereich, wie aus Fig. 3 erkennbar ist, flacher und im Mittelbereich 6 stärker gerundet, jedoch schmäler ausgebildet ist.

Aus Fig. 1 wird erkennbar, wie sich aus einer Mehrzahl parallel zueinander angeordneter Leisten 1 ein Lattenrost 7 ausbilden läßt, indem die Abschnitte 5 auf Längsholmen 8 beziehungsweise 9 gelagert werden, welche ihrerseits wieder in einem Grundgestell 10 aufgenommen sind.

Zusammenfassend ist festzustellen, daß eine erfindungsgemäße Kunststoffleiste eine extrem leichte, materialsparende Bauweise ermöglicht, wobei die hohe Dauerelastizität und Alterungsbeständigkeit von glasfaserverstärkten Kunststoffen ausgenutzt wird, und wobei durch das Hohlprofil die gewünschte Steifigkeitsverteilung erzielt werden kann.

## Patentansprüche

1. Elastische Kunststoffleiste, insbesondere für Lattenroste (7) von Liegemöbeln, bei welchen die Kunststoffleiste (1) äuf seitlichen Längsholmen (9) aufliegt, wobei die Kunststoffleiste (1) aus einem duroplastischen oder thermoplastischen Material mit im wesentlichen unidirektional orientierten Verstärkungsfasern gebildet ist, wobei die Kunststoffleiste (1) als Hohlprofil mit einem sich in Profillängsrichtung werändernden Querschnitt gebildet ist, **dadurch gekennzeichnet, daß** der Querschnitt im Mittelbereich (6) schmäler und höher, und übergehend in die Randbereiche (3) breiter und flacher ausgebildet ist.

2. Kunststoffleiste nach Anspruch 1, **dadurch gekennzeichnet, daß** sie aus einem Thermoplast mit einem Fasergehalt von mehr als 40 Vol.-% besteht.

3. Kunststoffleiste nach Anspruch 1, **dadurch gekennzeichnet, daß** die eingesetzten Fasern als lange Fasern beziehungsweise als Endlosfasern ausgebildet sind.

4. Kunststoffleiste nach Anspruch 2, **dadurch gekennzeichnet, daß** die Fasern Glasfasern, Kohlefasern, Aramidfasern, synthetische Fasern, Naturfasern oder Mischungen hieraus sind.

5. Kunststoffleiste nach Anspruch 1, **dadurch gekennzeichnet, daß** sie in ihren Randbereichen (3) einen U- oder S-förmigen Auflagebereich (4) in Form eines federnden, mit der Kunststoffleiste (1) einstückigen Abschnitts aufweist.

6. Kunststoffleiste nach Anspruch 1, **dadurch gekennzeichnet, daß** an ihrer Oberseite eine Druckaufnahmenanordnung angebracht ist.

7. Kunststoffleiste nach Anspruch 1, **dadurch gekennzeichnet, daß** der Innenraum des Hohlprofils mit Gas- und/oder mit einem Schaumstoff gefüllt ist.

8. Verfahren zu Herstellung einer Kunststoffleiste nach einem der Ansprüche 1 bis 5, **dadurch gekennzeichnet, daß** aus einem endlosen Strangprofil aus einem Thermoplast-Faser-Verbund der jeweiligen Leiste entsprechende Abschnitte abgetrennt und in einer der Endform entsprechenden längsgeteilten Form dann unter Wärme- und Druckeinwirkung eine Umformung derart vorgenommen wird, daß der Thermoplast in den Schmelzzustand übergeführt und mittels Druck geformt wird.

9. Verfahren nach Anspruch 8, **dadurch gekennzeichnet, daß** bei der Umformung mit einem Gas-Innendruck-Verfahren gearbeitet wird.

10. Verfahren nach Anspruch 9, **dadurch gekennzeichnet, daß** eine einen hohen Anteil langer, jedoch endlicher Verstärkungsfasern enthaltende Thermoplastschmelze in Längsrichtung in das Formnest eingespritzt wird, wobei sich die Verstärkerungsfasern in den äußeren Schmelzeschichten in axialer Richtung ausrichten, und wobei vor einer vollständigen Füllung des Formnestes Gas mit hohem Druck in die einströmende Schmelze injiziert wird, welches nach Abschluß der Formfüllung den hohlen Kern des Profils bildet, wohingegen die erstarrte Thermoplastschmelze die relativ zum Stabdurchmesser dünne Profilwandung ausbildet.

## Claims

1. A flexible plastic slat, in particular for slatted frames (7) of reposing furniture, in which the plastic slat (1) rests on lateral longitudinal spars (9), wherein the plastic slat (1) is formed from duroplastic or thermoplastic material with substantially unidirectional reinforcing fibers, and wherein the plastic slat (1) is a hollow section of a cross-sectional shape that changes in the lengthwise direction of the section, **characterized in that** the cross-sectional shape is narrower and higher in the central portion (6) and widens and flattens where passing into the marginal areas (3).

2. A plastic slat according to claim 1, **characterized in that** it consists of a thermoplast of a fiber content of more than 40 percent by volume.

3. A plastic slat according to claim 1, **characterized in that** the fibers used are long fibers or continuous fibers.

4. A plastic slat according to claim 2, **characterized in that** the fibers are glass fibers, carbon fibers, aramide fibers, synthetic fibers, natural fibers or mixtures thereof.

5. A plastic slat according to claim 1, **characterized in that** its marginal areas (3) comprise a U- or S-shaped bearing area (4) in the form of a springy portion made in one piece with the plastic slat (1).

6. A plastic slat according to claim 1, **characterized in that** a pressure absorption arrangement is mounted on its upper side.

7. A plastic slat according to claim 1, **characterized in that** the interior of the hollow section is filled with gas and/or a foamed material.

8. A method of manufacturing a plastic slat according to one of claims 1 to 5, **characterized in that** portions which correspond to the respective slat are detached from a continuous extruded section of a thermoplast-fiber compound and **in that**, in a lengthwise divided mold that corresponds to the final shape, a forming operation is then effected under the action of heat and pressure so that the thermoplast is converted to the melt stage and molded by pressure.

9. A method according to claim 8, **characterized in that** an internal gas pressure method is used for the conversion.

10. A method according to claim 9, **characterized in that** a thermoplast melt which contains a high percentage of long, but discontinuous reinforcing fibers is injected in the longitudinal direction into the mold cavity, wherein the reinforcing fibers orient themselves in the axial direction in the outer melt layers, and wherein, prior to the mold cavity being completely filled, gas at a high pressure is injected into the melt that flows in, constituting the hollow core of the section after termination of the mold filling job whereas the solidified thermoplast melt constitutes the section wall which is thin as compared to the bar diameter.

## Revendications

1. Barre élastique en matière plastique, en particulier pour des sommiers à lattes (7) de meubles de couchage, dans lesquels la barre en matière plastique (1) repose sur des longerons latéraux (9), la barre en matière plastique (1) étant constituée d'une matière thermodurcissable ou thermoplastique à fibres de renfort orientées de manière sensiblement unidirectionnelle, la barre en matière plastique (1) étant conçue sous la forme d'un profilé creux avec une section transversale qui varie dans la direction longitudinale du profilé, **caractérisée en ce que** la section transversale est plus étroite et plus haute dans la zone centrale (6) et devient plus large et plus plate en se prolongeant dans les zones de bords (3).

2. Barre en matière plastique selon la revendication 1, **caractérisée en ce qu'**elle est constituée d'une matière thermoplastique avec une teneur en fibres supérieure à 40 % en volume.

3. Barre en matière plastique selon la revendication 1, **caractérisée en ce que** les fibres mises en oeuvre sont conçues sous la forme de fibres longues ou, respectivement, de fibres continues.

4. Barre en matière plastique selon la revendication 2, **caractérisée en ce que** les fibres sont des fibres de verre, des fibres de carbone, des fibres d'aramide, des fibres synthétiques, des fibres naturelles ou des mélanges de celles-ci.

5. Barre en matière plastique selon la revendication 1, **caractérisée en ce qu'**elle comporte, dans ses zones de bords (3), une zone d'appui en forme de U ou de S (4) en forme de portion élastique conçue d'un seul tenant avec la barre en matière plastique (1).

6. Barre en matière plastique selon la revendication 1, **caractérisée en ce qu'**un dispositif d'absorption de pression est disposé sur son dessus.

7. Barre en matière plastique selon la revendication 1, **caractérisée en ce que** l'intérieur du profilé creux est rempli de gaz et/ou de mousse.

8. Procédé pour la fabrication d'une barre en matière plastique selon une des revendications 1 à 5, **caractérisé en ce que** des portions correspondant à chaque barre sont débitées à partir d'un profilé extrudé continu en composite matière thermoplastique-fibres et une déformation est ensuite réalisée, avec mise en oeuvre de chaleur et de pression, dans un moule divisé longitudinalement correspondant à la forme finale, **en ce que** la matière thermoplastique est mise à l'état de fusion et moulée au moyen d'une pression.

9. Procédé selon la revendication 8, **caractérisé en ce que**, lors de la déformation, on travaille avec un procédé à pression interne de gaz.

10. Procédé selon la revendication 9, **caractérisé en ce qu'**une masse thermoplastique fondue contenant une proportion élevée de fibres de renfort longues mais discontinues est injectée dans la direction longitudinale dans l'empreinte de moulage, les fibres de renfort s'orientant dans la direction axiale dans les couches de extérieures de masse fondue et, avant un remplissage complet de l'empreinte de moulage, du gaz est injecté à haute pression dans la masse fondue entrante, lequel forme, à l'issue du remplissage du moule, le noyau creux du profilé, tandis que la masse thermoplastique fondue solidifiée constitue la paroi de profilé mince par rapport au diamètre de la barre.
